(19) Europäisches Patentamt / European Patent Office / Office européen des brevets

(11) **EP 2 079 212 A1**

(12) **EUROPEAN PATENT APPLICATION**

(43) Date of publication:
**15.07.2009 Bulletin 2009/29**

(51) Int Cl.:
***H04L 27/26*** *(2006.01)*

(21) Application number: **08000491.4**

(22) Date of filing: **11.01.2008**

| | |
|---|---|
| (84) Designated Contracting States:<br>**AT BE BG CH CY CZ DE DK EE ES FI FR GB GR<br>HR HU IE IS IT LI LT LU LV MC MT NL NO PL PT<br>RO SE SI SK TR**<br>Designated Extension States:<br>**AL BA MK RS**<br><br>(71) Applicant: **Sandbridge Technologies, Inc.**<br>**White Plains, NY 10610 (US)** | (72) Inventors:<br>• **Chun, Joon-Hwa**<br>  **Ossining, N.Y. 10562 (US)**<br>• **Iancu, Daniel**<br>  **Pleasantville, N.Y. 10570 (US)**<br><br>(74) Representative: **Strehl Schübel-Hopf & Partner**<br>**Maximilianstrasse 54**<br>**80538 München (DE)** |

(54) **A method of initial synchronization of a communication signal**

(57)     The present method of initial synchronization of a communication signal includes the steps of symbol boundary search, fractional frequency offset estimation, fractional frequency offset compensation, frame boundary search, integer frequency offset estimation, integer frequency offset compensation, preamble segment ID search and preamble cell ID search. The symbol boundary search includes estimating the boundary of a present data symbol by a correlation index for the present data symbol and the correlation index for the next data symbol. The frame boundary search includes identifying the preamble symbol in the symbols found in the symbol boundary search to determine the frame boundary. The integer frequency offset estimation is derived from the pilot subcarriers of the frame control header of the frame after locating the preamble symbol.

Initial Sync

↓

Double Correlator
(Symbol Boundary Search, Fractional Frequency Offset Estimation)

10

↓

Fractional Frequency Offset Compensation

↓

Preamble Identification (Frame Boundary Search)

↓

Preamble? —— NO —→ Next Symbol

↓ YES

Integer Frequency Offset Estimation with FCH

↓

Integer Frequency Offset Compensation for Preamble

↓

Segment/ Cell ID Search on Preamble

FIGURE 1

**Description**

BACKGROUND AND SUMMARY OF THE INVENTION

The present invention relates generally to the initial synchronization methods and more specifically to an improvement in the steps of the initial synchronization methods.

Although the method will be described for mobile WiMAX systems (IEEE 802.16e, WiBro) as an example, it is applicable to other communication systems and protocols. The initial synchronization methods generally include a frame boundary search, fractional/integer frequency offset estimation, and segment/cell ID searches.

The present method of initial synchronization of a communication signal includes the steps of symbol boundary search, fractional frequency offset estimation, fractional frequency offset compensation, frame boundary search, integer frequency offset estimation, integer frequency offset compensation, preamble segment ID search and preamble cell ID search.

The symbol boundary search includes estimating the boundary of a present data symbol by a correlation index for the present data symbol and the correlation index for the next data symbol. The combined correlation index is

$$\hat{i} = \arg\max_{i} | \sum_{v=0}^{G-1} \{y_{i+v} y_{i+v+N_{FFT}}^{*} + y_{i+v+G+N_{FFT}} y_{i+v+G+2N_{FFT}}^{*}) \} |$$

where i denotes the correlation index, *G* the cyclic prefix length, *y* the observed time domain samples, and $N_{FFT}$ the size of the symbol. The combined correlation index *i* is calculated iteratively as follows:

$$\hat{i} = \arg\max_{i} | C(i) |,$$

where

$$\text{; } C(0) = \sum_{v=0}^{G-1} \{y_v y_{v+N_{FFT}}^{*} + y_{v+G+N_{FFT}} y_{v+G+2N_{FFT}}^{*}) \}$$

and
$$C(i+1) = C(i) + (y_{i+G} y_{i+G+N_{FFT}}^{*}) + (y_{i+2G+N_{FFT}} y_{i+2G+2N_{FFT}}^{*}) - (y_i y_{i+N_{FFT}}^{*}) - (y_{i+G+N_{FFT}} y_{i+G+2N_{FFT}}^{*})$$

The frame boundary search includes identifying the preamble symbol in the symbols found in the symbol boundary search to determine the frame boundary. Identifying the preamble symbol includes grouping the subcarriers into K subgroups of N consecutive subcarriers, where K is the number subcarries that define a specific segment group of subcarriers; collecting the distributed energies on subcarriers; and making a decision if the current symbol is preamble based on a threshold that is estimated by stochastic count process model.

The integer frequency offset is estimated from the pilot subcarriers of the frame control header of the frame without decoding the down load MAP.

The preamble segment ID search is based on:

$$\hat{n} = \arg\max_{n \in \{0,1,2\}} \{ \sum_{k=0}^{K-1} | y_{FFT} (\text{Pr}eambleCarrierSet_n^k) | \}$$

where Pr*emableCarrier* , the group index of *N* groups n =0,1,2..*N*-1, and the subcarrier index of a K length PN sequence *k*={0,1,2...*K*-1}.

The preamble cell ID search includes estimating the symbol timing offset $\hat{\varepsilon}_{|n}^{r}$ by:

$$\hat{\varepsilon}_{|n}^{r} = \arg\{\frac{N_{FFT}}{2\pi \mid m_{k+1} - m_{k} \mid}[\sum_{m_{k}, m_{k-1} \in \{non-zero\ subcarrier\}}(y_{FFT}(m_{k+1}) \times sign(pilot_{m_{k+1}}^{r,n})) \times (y'_{FFT}(m_{k}) \times sign(pilot_{m_{k1}}^{r,n}))^{\bullet}]\}$$

where the group index of N groups n =0,1,2..N-1, cell ID of R cell IDs in a segment group $r \in \{0,1,..,R-1\}$, $m_k$ and $m_{k+1}$ are two neighboring subcarrier positions, the subcarrier index of a K length PN sequence k={0,1,2..K-1} and $pilot_{m}^{r,n}$ represents the modulated PN sample for the preamble.

The preamble cell ID is estimated by:

$$\hat{r} = \arg\max_{r}\{\mid \sum_{m \in \{non-zero\ subcarriers\}}real(z_{m}^{r}) \times sign(pilot_{m}^{\hat{n},r}) \mid^{2}\}$$

where $z_{m}^{r} = y'_{FFT}(m) \times \exp(j2\pi \frac{m}{N_{FFT}}\hat{\varepsilon}_{|n}^{r})$,   $m \in$ {non-zero subcarriers}, $N_{FTT}$ is the symbol size.

These and other aspects of the present invention will become apparent from the following detailed description of the invention, when considered in conjunction with accompanying drawings.

BRIEF DESCRIPTION OF THE DRAWINGS

Figure 1 is a flow chart of method of initial synchronization of a communication signal according to the present disclosure.
Figure 2 is a diagram of an example of a TDD frame of the prior art.
Figure 3 is a diagram of an example of a subcarrier index of the prior art.
Figure 4 is a diagram of a double correlation of the estimate the symbol boundary according to the present disclosure.

DETAILED DESCRIPTION OF THE PREFERRED EMBODIMENTS

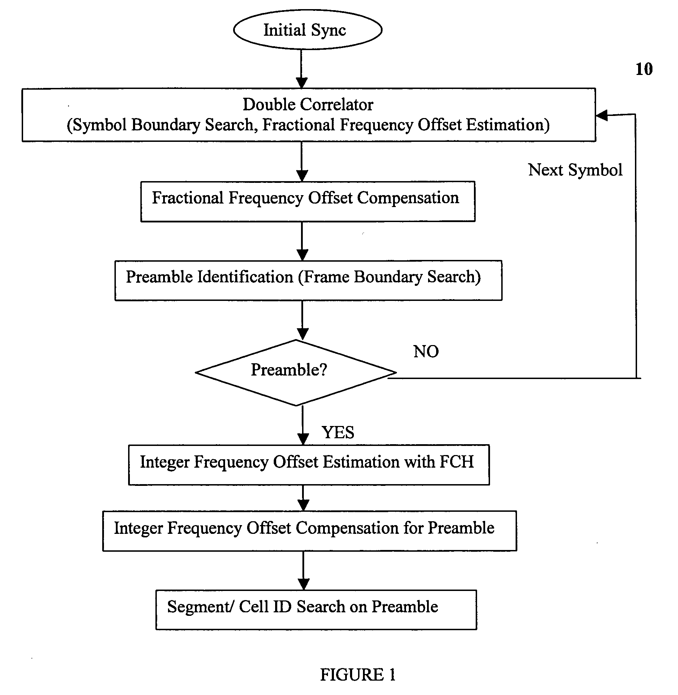

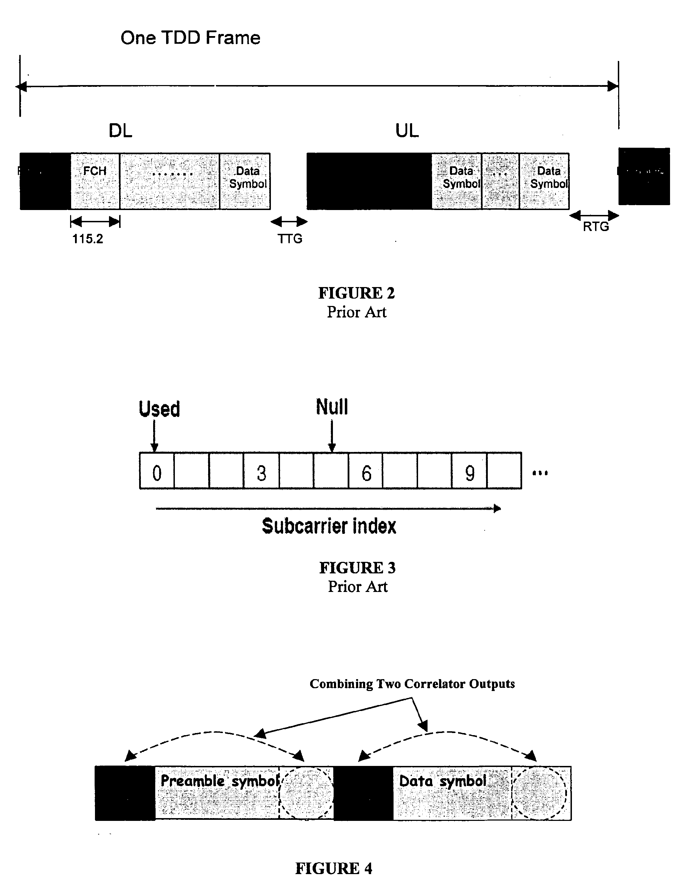

The method of initial synchronization of a communication signal is illustrated in Figure 1. The initial synchronization process begins at Step 10 to perform the symbol boundary search and fractional frequency offset estimation using a double correlation. Next the fractional frequency offset is compensated at Step 12. The frame boundary search is performed by preamble identification at Step 14. If a preamble has not been found at Step 16, the process goes back to the Step 10 via 18 to again do a double correlation.
If a preamble has been found at Step 16, the integer frequency offset is estimated using the frame control head or FCH at Step 20. Next the integer frequency offset compensation for the preamble is performed at Step 22. Finally, a segment/cell ID search is performed on the preamble at Step 24. This is the end of the synchronization process.
Each frame in the downlink transmission begins with a preamble followed by down load DL and up load UL transmission periods as shown in Figure 2. In the frame, the TTG shall be inserted between the downlink and uplink, and RTG at the end of each frame to allow the BS to turn around. In IEEE 802.16e WMAN-OFDMA, the duration of one physical frame ranges from 2 ms to 20 ms, and the FFT sizes of an OFDMA symbol are defined as 128, 512, 1024, and 2048. See IEEE 802.16e - 2005, Standard for local and metropolitan area networks Part 16: Air Interface for Fixed and Mobile Broadband Wireless Access Systems. While in WiBro, the duration of one physical and the FFT size of OFDMA symbol are fixed as 5 m and 1024, respectively. See *Specifications for 2.3 GHz band Portable Internet Service (TTAS. KO-06.0082/R1)..*
Although the initial synchronization algorithms is described for the WiBro system as an example, all these algorithms can be applied to 802.16e WMAN-OFDMA as well.
The first symbol of DL burst in every frame is the preamble. In the preamble, there are N or in this example three different segment groups, and each group has different PN sequences. The indices of these groups can be defined

as

$$\Pr emableCarrierSet_n^k = n + N \cdot k, \, ,  \qquad (1)$$

where the group index of $N$ groups $n=0,1,2..N$-1, and the subcarrier index of a K length PN sequence $k=$ {0, 1,2 ...$K$-1} which will be mapped through.

Figure 3 shows the carrier indexing for the case of $n = 0$. Data in every third position is separated by two null positions.

For example, in 1024 FFT mode, there are 114 different PN sequences (see Table 1), and out of them each 38 sequences are defined for a specific subcarrier group. Within a subcarrier group, each of the 38 sequences indicates a specific cell. There are 284 subcarriers defined for a specific segment group. The index variable $n$ and $k$ in equation (1) determines the segment of the cell and subcarrier index of the preamble subcarriers, respectively.

Table 1. PN sequence per segment & cell ID for 1024 FFT mode.

| Index | IDcell | Segment | Series to modulate (im hexadecimal format) |
|---|---|---|---|
| 0 | 0 | 0 | A6F294537B285E1844677D133E4D53CCB1F182DE00489E53E6B6E77 065C7EEE7D0ADBEAF |
| 1 | 1 | 0 | 668321CBBE7F462E6C2A07E8BBDA2C7F7946D5F69E35AC8ACF7D6 4AB4A33C467001F3B2 |
| 2 | 2 | 0 | 1C75D30B2DF72CEC9117A0BD8EAF8E0502461FC07456AC906ADE0 3E9B5AH5E1D3F92C6E |
| 3 | 3 | 0 | 5F9A2E5CA7CC69A5227104FB1CC2262809F3B10D0542B9BDFDA4A 73A7046096DF0E8D3D |
| 4 | 4 | 0 | 82F8A0AB918138D84BB86224F6C342D81BC8BFE791CA9EB5409615 9D672E91C6E1032F |
| 5 | 5 | 0 | EE27E39B84CCF15BB1365EF90D478CD2C49EE8A70DE368EED7C94 20BOC6FFAF9AF035FC |
|  |  |  |  |
| 110 | 14 | 2 | 29E74579472FDD8FFC2700B2BF33C649989DD8153093A7CA08B50F7 A5E4BAED108A0F0D |
| 111 | 15 | 0 | A27F29D8D6CCD7EB4BBEM303E9E95802DB98BFD5B8ED03B8830 4359D923EC108CA3C8 |
| 112 | 16 | 1 | 3FE70E26FA00327FE3B2BE6BC5D5014F588F09C17D222C146DD68B 4824692A65188C76 |
| 113 | 17 | 2 | 41E91307EC58801CFF2C7E9CFEFBEB71681FAE2BEAEC72D4E4556 E99345D3BA4B369B59 |

The PN sequence to be assigned onto the preamble carrier set is modulated as

$$Pilot_k = 4 \cdot \sqrt{2} \cdot \left( \frac{1}{2} - w_k \right), \quad k = 0,1,..., K - 1 , \qquad (2)$$

where $w_k$ denotes the PN sequence in Table 1. Finally, the modulated preamble sequence is assigned to preamble subcarriers according to the index defined in equation (1).

In addition to modulated preamble subcarriers, for 1024 FFT mode, there will be 86 guard band subcarriers on the left and right.

The frame boundary search consists of two steps; the symbol boundary search and preamble identification. Once stream of filtered samples are available, the symbol boundary search block compute correlations between one sample to other sample with distance of symbol size. This correlation utilizes the repeating characteristic of the guard period (CP: Cyclic Prefix). Let $N_{FFT}$ and $G$ be the OFDMA symbol size and the CP size. The correlation window size is set to $N_{FFT} + G$ and within the window, a position of the correlated samples which provides the maximum correlator outputs is regarded as the symbol boundary. As discussed below, the frame boundary search scheme based on the symbol boundary search result.

The symbol boundary search relies on the characteristic of the guard period repetition in OFDM symbol. In this case, the ML estimate of the Symbol boundary is well known and is given by:

$$\hat{i} = \arg\max_i | \sum_{v=0}^{G-1} y_{i+v} y^*_{i+v+N_{FFT}} |, \qquad (3)$$

where $i$, $G$, $y$, and $N_{FFT}$ denote the correlation index, the cyclic prefix length, the observed time domain samples, and the number of the OFDM symbol subcarriers, respectively. The correlation of the repeating pattern of guard period for the next data symbol and add this additional correlation result to equation (3). This is the double correlator shown in Figures 1 and 4.

The estimation based on the double correlator can be shown as

$$\hat{i} = \arg\max_i | \sum_{v=0}^{G-1} \{y_{i+v} y^*_{i+v+N_{FFT}} + y_{i+v+G+N_{FFT}} y^*_{i+v+G+2N_{FFT}}\} |. \qquad (4)$$

Simply speaking, it is doubling the amount of statistics to provide better ML estimation results. The correlation in equation (4) can be calculated in iterative manner like below:

$$\hat{i} = \arg\max_i | C(i) |, \qquad (5)$$

where

$$C(0) = \sum_{v=0}^{G-1} \{y_v y^*_{v+N_{FFT}} + y_{v+G+N_{FFT}} y^*_{v+G+2N_{FFT}}\}$$

and

$$C(i+1) = C(i) + (y_{i+G} y^*_{i+G+N_{FFT}}) + (y_{i+2G+N_{FFT}} y^*_{i+2G+2N_{FFT}}) - (y_i y^*_{i+N_{FFT}}) - (y_{i+G+N_{FFT}} y^*_{i+G+2N_{FFT}}).$$

The number of computations in equation (4) does not require twice the number of computations than in equation (3). To explain the computational complexity for equation (4), let $S_t^n$ be the correlator outputs through sample $n$ and $n$ + $N_{FFT}$ within a correlation window $t$, where $n$ =0, 1, .., $N_{FFT}$ + $G$ -1 and t = 0, 1, 2, 3,.... Also, let $S_t = \{S_t^n\}_{n=0}^{N_{FFT}+G-1}$. When the correlations, $S_t$, $0 < t$, are calculated for a group of samples covered in $t$-th correlation window, the double correlation in equation (4) can be computed by adding the previous correlation outputs, $S_{t-1}$ to the current correlation outputs for $S_t$. Thus, the computations in equation (4) only require extra $N_{FFT} + G$ additions of the computations in equation (3).

That is, the terms $(y_{i+G} y^*_{i+G+N_{FFT}})$, $(y_i y^*_{i+N_{FFT}})$, and $(y_{i+v} y^*_{i+v+N_{FFT}})$ in equation (5) are already computed at previous correlator at window $t$-1 and can be added to the current correlator output to make double correlation.

The difference in the slot boundary estimation performance between the method in equation (3) and equation (4) is significant. Following Table 2 shows the variances for the double and single correlator for the case of SNRs; 3 dB, 6 dB, and 9 dB. The number of trials were 10,000 per each SNR case.

Table 2

|  | 3dB | 6dB | 9dB |
| --- | --- | --- | --- |
| Variance of the Symbol boundary estimator (Single Correlator) | 1.30 | 0.86 | 0.71 |
| Variance of the Symbol boundary estimator (Double Correlator) | 0.60 | 0.40 | 0.32 |

The results clearly show that the variances of the symbol boundary estimator from double correlator are about two times smaller than one from single correlator.

In the following table 3, another measurement is presented in which the performances of double and single correlator can be compared. The metric is defined as

$$\text{Rate\_Miss} = \frac{\text{Number of the cases that the symbol boundary is falsely detected}}{\text{Total Number of Trials}}$$

In Table 3, this metric is computed 10, 000 times for SNR of 3 dB, 6 dB, and 9 dB.

Table 3

|  | 3dB | 6dB | 9dB |
| --- | --- | --- | --- |
| Rate_Miss (Single Correlator) | 0.42 | 0.36 | 0.33 |
| Rate_Miss (Double Correlator) | 0.28 | 0.22 | 0.19 |

Once the symbol boundary is estimated, the frame boundary has to be determined. In the system, since the first symbol in the frame is the preamble, searching for the frame boundary is the same as identifying the preamble symbol out of the symbols whose boundary has been found.

Without loss of generality, the search procedure based on the WiBro system (1024 FFT mode) will be explained. In the WiBro system, after disregarding guard bands, a preamble is composed of 852 subcarriers (284 non-zero subcarriers + 568 zero subcarriers). There are 284 subcarriers defined for a specific segment group, $j$, $j = 0,1,2$. Let us define a subgroup which includes 3 consecutive subcarriers. There will be 284 subgroups and within each subgroup, the index $j$, $j = 0,1,2$, represents corresponding segment ID. The approach for identifying preamble is based on a count process, in which the energies per each subcarrier are computed and the computed energies of three consecutive subcarriers are grouped as three vectors, say $(e_0^k, e_1^k, e_2^k)$, $k = 0,...,283$, as discussed above. Within each group, a subcarrier position, $j$, $j = 0,1,2$, corresponds to the maximum energy in the group are searched and counted.

For clarification purpose, this procedure is explained in the following example. Suppose the sequence of subcarrier energies for the FFTed and guard band removed preamble symbol is (1.0, 3.6, 0.9, 1.2, 3.3, 0.7, ......,2.1, 1.3, 0.7, 1.1, 3.3, 0.7). First, the sequence of subcarrier energies are grouped as three vectors in consecutive manner and let $\tilde{j}^k$ denote the position of subcarrier which provide maximum energy in group $k$. The following is the count process

$$\text{At } k=0: \ (e_0^0, e_1^0, e_2^0) = (1.0, \ 3.6, \ 0.9), \ \therefore \ \tilde{j}^0 = 2,$$

$$\text{At } k=1: \ (e_0^1, e_1^1, e_2^1) = (1.2, \ 3.3, \ 0.7), \ \therefore \ \tilde{j}^1 = 2,$$

$$\text{At } k{=}100: \; (e_0^{100}, e_1^{100}, e_2^{100}) = (2.1, \; 1.3, \; 0.7), \; \therefore \; \tilde{j}^{100} = 1,$$

$$\text{At } k{=}283: \; (e_0^{283}, e_1^{283}, e_2^{283}) = (1.1, \; 3.3, \; 0.7), \; \therefore \; \tilde{j}^{283} = 2.$$

After counting $\tilde{j}^k$, a dominant $j$, $j = 0,1,2$, in the groups is determined from the number of its occurrences. The number of occurrences for $\tilde{j}^k \in \{0,1,2\}$ can be interpreted as the weight of its significance, and the normalized version of these weights can be used as the probabilities of $j$, $j = 0,1,2$, being a dominating subcarrier position. These probabilities can be well modeled by a conjugate prior distribution to multinomial distribution, Dirichlet distribution described in J. M. Bernardo and A. F. M. Smith, "Bayesian Theory", Wiley 1994.

A continuous random vector $x=(x_1,x_2,...,x_k)$ has a Dirichlet distribution of dimension k, with parameters $\alpha=(a_1, a_2,...,a_{k+1})$ $(\alpha_i > 0, \; i = 1,...,k =1)$ if its probability density $D_k(x|\alpha)$, $0 <x_i < 1$ and $x_1 + x_2 + ... +x_k < 1$, is

$$D_k(x \mid \alpha) = c \; x_1^{\alpha_1-1} x_2^{\alpha_2-1} .... x_k^{\alpha_k-1} (1 - \sum_{i=1}^{k} x_i)^{\alpha_{k+1}-1}$$

where c is the normalization constant and is defined by

$$c = \frac{\Gamma(\sum_{i=1}^{k+1} \alpha_i)}{\prod_{i=1}^{k+1} \Gamma(\alpha_i)} \; .$$

The mean vector are given by

$$E[x_i] = \frac{\alpha_i}{\sum_{j=1}^{k+1} \alpha_j} \; .$$

Let $P_j, j = 0,1,2$, be the probability of $j$, $j = 0,1,2$, being dominant in groups, and let $N_j$, $j = 0,1,2$, be the counted numbers which says how many times $j$ being dominant in 284 groups. Then, the Dirchlet distribution of $P_j$, $j = 0,1,2$, can be expressed by

$$D_2(P_j \mid \alpha) \propto P_0^{N_{01}-1} P_1^{N_1-1} (1 - \sum_{i=0}^{1} P_i)^{N_2-1} \tag{6}$$

The mean of the distribution is used for the probability estimation. That is,

$$\hat{P}_j = E[P_j] = \frac{N_j}{\sum_{i=0}^{2} N_i} = \frac{N_j}{284} \; .$$

The estimated probability $\hat{P}_j$, $j = 0,1,2$, is used as the threshold for determining the preamble. Following Table 4 shows the estimated probability of $j$, $j$ = 0,1,2, for SNR of 0 dB, 3 dB, and 6 dB when the true segment ID is 1. The number of trials were 10,000 for each SNR case.

Table 4

|  | 0 dB | 3 dB | 6 dB |
|---|---|---|---|
| $\hat{P}_0$ | 0.02 | 0.0018 | 0.0 |
| $\hat{P}_1$ | 0.96 | 0.9916 | 1.0 |
| $\hat{P}_2$ | 0.02 | 0.0018 | 0.0 |

The results in the table above shows us that even in hostile environment (SNR = 0 dB case), the estimated probability of dominating subcarrier position is as clear as 0.96.

The probability can be used as the threshold for preamble decision. For example, the probability 0.96 can be interpreted as like one subcarrier position occurred in about 272 times in SNR 0 dB. Thus, in SNR 0 dB environment, if the number of occurrences of a subcarrier position is over 272 times, the current symbol is the preamble.

The frequency offset is estimated after symbol synchronization. In the offset, there are integer parts and fractional parts, and both have to be estimated. Let $\varepsilon$, $\varepsilon_f$, and $\varepsilon_I$ denote frequency offset, integer frequency offset, and fractional frequency offset, respectively.

The relationship among frequency offset, the integer frequency offset, and fractional frequency offset can be given as

$$\varepsilon = (\varepsilon_I \times \text{subcarrier spacing} + \varepsilon_f) \quad \text{Hz.} \qquad (7)$$

ML estimation of the fractional frequency offset based on correlator outputs have been well known [2]. The fractional frequency offset $\varepsilon_f$ can be estimated from

$$\hat{\varepsilon}_f = \frac{\arg\{C(\hat{i})\}}{2\pi \times D \times T_s},\qquad (8)$$

where $C(\hat{i})$ is the maximum correlation calculated in (5), D denotes the delay, and $T_s$ the sample time.

The pilot subcarriers in FCH (Frame Control Header) is used to estimate the integer frequency offset. Since the subchannelization scheme used for FCH is always PUSC, we do not need to decode DL MAP to check the subchannelization mode of FCH. Thus, upon reception of the symbol following the preamble, the exact location of pilot subcarriers is after taking FFT of the symbol. In the WiBro system, the power of each pilot tone should be boosted 2.5 dB higher than the average power level of data tones. With this constraint, the integer frequency offset which can cause cyclic shift of subcarrier position in a symbol is estimated.

The segment ID and cell ID search are performed after preamble identification. The post-FFT processing for both segment ID and the cell ID search are used. As shown in Figure 1, once the integer frequency offset is compensated for an identified preamble symbol, segment ID search is performed on the FFTed preamble symbol. After the segment ID is estimated, the number of cell ID candidates can be reduced by factor 3. That is, cell ID search can be performed within a decided segment group.

Let $y_{FFT}$ be the FFTed frequency samples of the preamble after removing guard subcarriers. The segment ID can be then searched based on the following criterion (See equation (1) for the description of index variables):

$$\hat{n} = \arg\max_{n \in \{0,1,2\}} \{\sum_{k=0}^{K-1} | y_{FFT}(\Pr eambleCarrierSet_n^k) |\} .$$

After the segment ID is determined, the number of candidates for the true preamble sequence is reduced to one third of the number. With regard to each candidate sequence, the symbol timing offset is estimated from the possible frame boundary estimation error. Symbol timing offset can be estimated by averaging the phase differences among neighbor frequency samples:

$$\hat{\varepsilon}_{|n}^{r} = E\{\frac{N_{FFT}}{2\pi \mid m_{k+1} - m_{k} \mid}[\arg(\frac{y_{FFT}(m_{k+1})}{pilot_{m_{k+1}}^{r,n}}) - \arg(\frac{y_{FFT}(m_{k})}{pilot_{m_{k}}^{r,n}})]\}, \qquad (9)$$

where $\hat{\varepsilon}_{|n}^{r}$ denotes the symbol timing error estimate based on assumption that the preamble is member of a segment group $n$, $n=0,1,2$, and cell ID, $r \in \{0,1,..,R\text{-}1\}$, $R$ denotes the number of cell IDs in a segment group. The $m_k$ and $m_{k+1}$, $k = 0,1,..,$ $K\text{-}1$ (see equation (1) for the description of $K$), are two neighboring subcarrier positions, and $pilot_{m}^{r,n}$ represents the modulated PN sample for the preamble. See K. Nikitopoulos and A. Polydoros, "Post-FFT Fine Frame Synchronization for OFDM system" in *VTC 1997.*

The average operation in equation (9) can be replaced by simple summation. Also since the phase difference is only of interest, calculation can be further simplified as:

$$\hat{\varepsilon}_{|n}^{r} = \arg\{\frac{N_{FFT}}{2\pi \mid m_{k+1} - m_{k} \mid}[\sum_{m_{k},m_{k+1}\in\{non\text{-}zero\,subcarrier\}}(y_{FFT}(m_{k+1}) \times sign(pilot_{m_{k+1}}^{r,n})) \times (y'_{FFT}(m_{k}) \times sign(pilot_{m_{k1}}^{r,n}))^{*}]\} (10)$$

For each $r$, the symbol timing error can be compensated (or corrected) by

$$z_{m}^{r} = y'_{FFT}(m) \times \exp(j2\pi \frac{m}{N_{FFT}}\hat{\varepsilon}_{|n}^{r}), \qquad (11)$$

where $m \in \{non$ - $zero$ subcarriers$\}$, $r = \{0,1,..,R\text{-}1\}$.
The cell ID is estimated by choosing the maximum output of the dot products (cross-correlating equation (7) and $r$ modulated pilot patterns with lag zero). That is,

$$\hat{r} = \arg\max_{r}\{| \sum_{m\in\{non\text{-}zero\,subcarriers\}}real(z_{m}^{r}) \times sign(pilot_{m}^{\hat{n},r}) |^{2}\} \qquad (12)$$

Although the present invention has been described and illustrated in detail, it is to be clearly understood that this is done by way of illustration and example only and is not to be taken by way of limitation. The scope of the present invention is to be limited only by the terms of the appended claims.

**Claims**

1.  A method of initial synchronization of a communication signal including the steps of symbol boundary search, fractional frequency offset estimation, fractional frequency offset compensation, frame boundary search, integer frequency offset estimation, integer frequency offset compensation, preamble segment ID search and preamble cell ID search, wherein the symbol boundary search comprises:

    estimating the boundary of a present data symbol by a correlation index for the present data symbol and the correlation index for the next data symbol.

2.  The method of Claim 1, wherein the combined correlation index is

$$\hat{i} = \arg\max_{i} |\sum_{v=0}^{G-1} \{y_{i+v} y^{*}_{i+v+N_{FFT}} + y_{i+v+G+N_{FFT}} y^{*}_{i+v+G+2N_{FFT}})\}|$$

where i denotes the correlation index, $G$ the cyclic prefix length, $y$ the observed time domain samples, and $N_{FFT}$ the size of the symbol.

**3.** The method of Claim 2, wherein the combined correlation index i is calculated iteratively as follows:

$$\hat{i} = \arg\max_{i} |C(i)|,$$

where

$$C(0) = \sum_{v=0}^{G-1} \{y_{v} y^{*}_{v+N_{FFT}} + y_{v+G+N_{FFT}} y^{*}_{v+G+2N_{FFT}})\}$$

and

$$C(i+1) = C(i) + (y_{i+G} y^{*}_{i+G+N_{FFT}}) + (y_{i+2G+N_{FFT}} y^{*}_{i+2G+2N_{FFT}}) - (y_{i} y^{*}_{i+N_{FFT}}) - (y_{i+G+N_{FFT}} y^{*}_{i+G+2N_{FFT}})$$

**4.** The method of Claim 1, wherein the frame boundary search includes identifying the preamble symbol in the symbols found in the symbol boundary search to determine the frame boundary.

**5.** The method of Claim 4, wherein identifying the preamble symbol includes grouping the subcarriers into K subgroups of N consecutive subcarriers, where K is the number subcarries that define a specific segment group of subcarriers; collecting the distributed energies on subcarriers; and making a decision if the current symbol is preamble based on a threshold that is estimated by stochastic count process model.

**6.** The method of Claim 1, wherein the integer frequency offset estimation is derived from the pilot subcarriers of the frame control header of the frame after locating the preamble symbol.

**7.** The method of Claim 1, wherein the integer frequency offset estimation is derived from the pilot subcarriers of the frame control header of the frame without decoding the down load MAP.

**8.** The method of Claim 1, wherein the preamble segment ID search and the preamble cell ID search are performed after the integer frequency offset compensation of the identified preamble.

**9.** The method of Claim 8, wherein the preamble segment ID search is performed before the preamble cell ID search.

**10.** The method of Claim 1, wherein the preamble segment ID search is based on:

$$\hat{n} = \arg\max_{n \in \{0,1,2\}} \{\sum_{k=0}^{K-1} |y_{FFT}(\mathrm{Pr}\,eambleCarrierSet_{n}^{k})|\}$$

where $\Pr emableCarrierSet_n^k = n + N \cdot k,$ the group index of $N$ groups $n$=0,1,2..$N$-1, and the subcarrier index of a K length PN sequence $k$= {0,1,2...$K$-1}.

11. The method of Claim 1, wherein the preamble cell ID search includes estimating the symbol timing offset $\hat{\varepsilon}_{|n}^r$ by:

$$\hat{\varepsilon}_{|n}^r = \arg\{\frac{N_{FFT}}{2\pi \mid m_{k+1} - m_k \mid}[\sum_{m_k,m_{k-1}\in\{non-zero\ subcarrier\}}(y_{FFT}(m_{k+1}) \times sign(pilot_{m_{k+1}}^{r,n})) \times (y'_{FFT}(m_k) \times sign(pilot_{m_{k_1}}^{r,n}))^\bullet]\}$$

where the group index of $N$ groups $n$=0, 1,2..$N$-1, cell ID of $R$ cell IDs in a segment group $r \in$ {0,1,..,$R$-1}, $m_k$ and $m_{k+1}$ are two neighboring subcarrier positions, the subcarrier index of a K length PN sequence $k$={0,1,2...$K$-1} and

$pilot_m^{r,n}$ represents the modulated PN sample for the preamble.

12. The method of Claim 11, wherein the preamble cell ID is estimated by:

$$\hat{r} = \arg\max_r\{\mid \sum_{m\in\{non-zero\ subcarriers\}} real(z_m^r) \times sign(pilot_m^{\hat{n},r}) \mid^2\}$$

where $z_m^r = y'_{FFT}(m) \times \exp(j2\pi\frac{m}{N_{FFT}}\hat{\varepsilon}_{|n}^r),$ $m \in$ {*non-zero* subcarriers}, $N_{FTT}$ is the symbol size.

13. A method of initial synchronization of a communication signal including the steps of symbol boundary search, fractional frequency offset estimation, fractional frequency offset compensation, frame boundary search, integer frequency offset estimation, integer frequency offset compensation, preamble segment ID search and preamble cell ID search, wherein the frame boundary search includes identifying the preamble symbol in the symbols found in the symbol boundary search to determine the frame boundary, and identifying the preamble symbol comprises:

grouping the subcarriers into K subgroups of N consecutive subcarriers, where K is the number subcarries that define a specific segment group of subcarriers;
collecting the distributed energies on subcarriers; and
making a decision if the current symbol is preamble based on a threshold that is estimated by stochastic count process model.

14. A method of initial synchronization of a communication signal including the steps of symbol boundary search, fractional frequency offset estimation, fractional frequency offset compensation, frame boundary search, integer frequency offset estimation, integer frequency offset compensation, preamble segment ID search and preamble cell ID search, wherein the integer frequency offset estimation is derived from the pilot subcarriers of the frame control header of the frame after locating the preamble symbol.

15. The method of Claim 14, wherein the integer frequency offset estimation is derived from the pilot subcarriers of the frame control header of the frame without decoding the down load MAP.

16. A method of initial synchronization of a communication signal including the steps of symbol boundary search, fractional frequency offset estimation, fractional frequency offset compensation, frame boundary search, integer frequency offset estimation, integer frequency offset compensation, preamble segment ID search and preamble cell ID search, wherein the preamble segment ID search is based on:

$$\hat{n} = \underset{n \in \{0,1,2\}}{\arg\max} \{ \sum_{k=0}^{K-1} | y_{FFT}(\Pr eambleCarrierSet_n^k) | \}$$

where $\Pr eambleCarrierSet_n^k = n + N \cdot k,$ the group index of $N$ groups $n$=0,1,2.$N$-1, and the subcarrier index of a K length PN sequence $k$={0,1,2...$K$ -1}.

17. A method of initial synchronization of a communication signal including the steps of symbol boundary search, fractional frequency offset estimation, fractional frequency offset compensation, frame boundary search, integer frequency offset estimation, integer frequency offset compensation, preamble segment ID search and preamble cell ID search, wherein the preamble cell ID search includes estimating the symbol timing offset $\hat{\varepsilon}_{|n}^r$ by:

$$\hat{\varepsilon}_{|n}^r = \arg\{ \frac{N_{FFT}}{2\pi | m_{k+1} - m_k |} [ \sum_{m_k, m_{k-1} \in \{non-zero\ subcarrier\}} (y_{FFT}(m_{k+1}) \times sign(pilot_{m_{k+1}}^{r,n})) \times (y'_{FFT}(m_k) \times sign(pilot_{m_{k+1}}^{r,n}))^* ] \}$$

where the group index of $N$ groups $n$=0,1,2..$N$-1, cell ID of $R$ cell IDs in a segment group $r \in \{0,1,..,R-1\}$, $m_k$ and $m_{k+1}$ are two neighboring subcarrier positions, the subcarrier index of a K length PN sequence $k$={0,1,2...$K$-1} and $pilot_m^{r,n}$ represents the modulated PN sample for the preamble.

18. The method of Claim 17, wherein the preamble cell ID is estimated by:

$$\hat{r} = \underset{r}{\arg\max} \{ | \sum_{m \in \{non-zero\ subcarriers\}} real(z_m^r) \times sign(pilot_m^{\hat{n},r}) |^2 \}$$

where $z_m^r = y'_{FFT}(m) \times \exp(j 2\pi \frac{m}{N_{FFT}} \hat{\varepsilon}_{|n}^r),$ $m \in$ {non-zero subcarriers}, $N_{FTT}$ is the symbol size.

**10**

Initial Sync

Double Correlator
(Symbol Boundary Search, Fractional Frequency Offset Estimation)

Next Symbol

Fractional Frequency Offset Compensation

Preamble Identification (Frame Boundary Search)

Preamble? — NO

YES

Integer Frequency Offset Estimation with FCH

Integer Frequency Offset Compensation for Preamble

Segment/ Cell ID Search on Preamble

FIGURE 1

EP 2 079 212 A1

One TDD Frame

DL        UL

FCH ...... Data Symbol | Data Symbol ... Data Symbol

115.2    TTG    RTG

**FIGURE 2**
Prior Art

Used     Null

| 0 | | | 3 | | | 6 | | | 9 | | ...

Subcarrier index

**FIGURE 3**
Prior Art

Combining Two Correlator Outputs

Preamble symbol    Data symbol

**FIGURE 4**

14

Europäisches
Patentamt
European
Patent Office
Office européen
des brevets

**EUROPEAN SEARCH REPORT**

Application Number

EP 08 00 0491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KWANG SOON KIM ET AL: "Synchronization and Cell-Search Technique Using Preamble for OFDM Cellular Systems" IEEE TRANSACTIONS ON VEHICULAR TECHNOLOGY, vol. 56, no. 6, 1 November 2007 (2007-11-01), pages 3469-3485, XP011194692 IEEE SERVICE CENTER, PISCATAWAY, NJ, US ISSN: 0018-9545 page 3472, section III. A. section VI, first paragraph | 1,2 | INV. H04L27/26 |
| Y | | 3 | |
| | ----- | | |
| X | HYOUNGSOO LIM ET AL: "Initial Synchronization for WiBro" COMMUNICATIONS, 2005 ASIA-PACIFIC CONFERENCE ON PERTH, WESTERN AUSTRALIA 03-05 OCT. 2005, PISCATAWAY, NJ, USA,IEEE, 3 October 2005 (2005-10-03), pages 284-288, XP010860787 ISBN: 978-0-7803-9132-1 section III | 1 | |
| | ----- | | TECHNICAL FIELDS SEARCHED (IPC) |
| Y | EP 1 389 835 A (DISENO SISTEMAS SILICIO SA [ES]) 18 February 2004 (2004-02-18) * paragraph [0005] * * paragraph [0013] - paragraph [0015] * * paragraph [0059] * * claim 4 * | 3 | H04L H04B |
| | ----- | | |
| | -/-- | | |

~~The present search report has been drawn up for all claims~~

| Place of search | Date of completion of the search | Examiner |
|---|---|---|
| The Hague | 3 October 2008 | Moreno, Marta |

EPO FORM 1503 03.82 (P04C01)

EP 2 079 212 A1

Europäisches Patentamt
European Patent Office
Office européen des brevets

**EUROPEAN SEARCH REPORT**

Application Number

EP 08 00 0491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HYEONG-SOOK PARK ET AL: "Design of synchronization in OFDMA/TDD based WiBro system" 2007 IEEE 18TH INTERNATIONAL SYMPOSIUM ON PERSONAL, INDOOR AND MOBILE RADIO COMMUNICATIONS, 3 September 2007 (2007-09-03), - 7 September 2008 (2008-09-07) pages 3858-3862, XP002498161 IEEE Piscataway, NJ, USA ISBN: 978-1-4244-1143-6 * the whole document * | 1,2 | |
| A | JONGNAM KIM ET AL: "New preamble structures for synchronization and cell searching in OFDM systems" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 3, 25 September 2005 (2005-09-25), pages 1623-1627, XP010878719 ISBN: 978-0-7803-9152-9 section III | 1,2 | TECHNICAL FIELDS SEARCHED (IPC) |
| A | SCHMIDL T M ET AL: "Robust Frequency and Timing Synchronization for OFDM" 19971201, vol. 45, no. 12, 1 December 1997 (1997-12-01), pages 1613-1621, XP011009085 * page 1615, column 1, last paragraph * | 1-3 | |

~~The present search report has been drawn up for all claims~~

| Place of search | Date of completion of the search | Examiner |
|---|---|---|
| The Hague | 3 October 2008 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt
European
Patent Office
Office européen
des brevets

Application Number

EP 08 00 0491

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patentapplication does not comply with the requirements of unity of invention and relates to severalinventions or groups of inventions, namely:

```
1. claims: 1-3

              Symbol boundary search
              ---

2. claims: 1,4,5,13

            Identification of the preamble symbol
            ---

3. claims: 1,6,7,14,15

            Integer Frequency Offset estimation
            ---

4. claims: 1,8,9,10,16

            Preamble segment ID search
            ---

5. claims: 1,11,12,17,18

        Symbol timing offset estimation for the cell ID
        ---
```

## ANNEX TO THE EUROPEAN SEARCH REPORT
## ON EUROPEAN PATENT APPLICATION NO.

EP 08 00 0491

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2008

| Patent document cited in search report | | Publication date | Patent family member(s) | | Publication date |
|---|---|---|---|---|---|
| EP 1389835 | A | 18-02-2004 | AT | 377870 T | 15-11-2007 |
| | | | BR | 0210055 A | 17-08-2004 |
| | | | CA | 2448106 A1 | 28-11-2002 |
| | | | CN | 1528059 A | 08-09-2004 |
| | | | DE | 60223356 T2 | 28-08-2008 |
| | | | EA | 5669 B1 | 28-04-2005 |
| | | | WO | 02095976 A1 | 28-11-2002 |
| | | | ES | 2296929 T3 | 01-05-2008 |
| | | | ES | 2188370 A1 | 16-06-2003 |
| | | | JP | 4044445 B2 | 06-02-2008 |
| | | | JP | 2004533768 T | 04-11-2004 |
| | | | MX | PA03010658 A | 02-03-2004 |
| | | | US | 2004114551 A1 | 17-06-2004 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. M. Bernardo ; A. F. M. Smith.** Bayesian Theory. Wiley, 1994